# EUROPÄISCHE PATENTANMELDUNG

(11) **EP 4 667 194 A1**
(43) Veröffentlichungstag der Anmeldung: **24.12.2025**
(21) Anmeldenummer: 24183467.0
(22) Anmeldetag: 20.06.2024
(51) Int. Cl.: B29C 65/20, B29C 37/04, B29L 31/00

(54) **VORRICHTUNG UND VERFAHREN ZUR HERSTELLUNG EINER PROFILVERBINDUNG**

(71) Anmelder: Stürtz Maschinenbau GmbH, 53577 Neustadt / Wied-Rott (DE)
(72) Erfinder: Beck, Felix, 50674 Köln (DE)
(74) Vertreter: KBN IP Patentanwälte Partnerschaft mbB

(57) **Zusammenfassung**

Die Erfindung betrifft ein Verfahren und eine Vorrichtung zur Herstellung einer Eckverbindung (10) zwischen zwei an stirnseitigen Verbindungsflächen auf Gehrung zugeschnittenen Profilstäben (1) aus Kunststoff und/oder Verbundwerkstoffen, bei welchem die miteinander zu verbindenden Profilstäbe (1) in der für die Eckverbindung (10) vorgesehenen Ausrichtung eingespannt und mit ihren Verbindungsflächen an einen auf eine vorgegebene Schweißtemperatur erhitzten Schweißspiegel angelegt und an diesem unter einer ersten Längenverkürzung und Bildung eines Schweißwulstes aus dem bei der Längenverkürzung verdrängten Material angepresst werden und nach dem Entfernen des Schweißspiegels unter Druck und weiterer, zweiter Längenverkürzung zusammengefügt und miteinander unter Ausbildung der Eckverbindung verschweißt werden, wobei nach dem Verschweißen der Eckverbindung (10) ein äußerer Eckbereich (100) der Eckverbindung (10) unter Aufrechterhaltung der Positionierung der Profilstäbe (1) von einem zugeordneten Bearbeitungswerkzeug (3) bearbeitet wird und dabei ein im äußeren Eckbereich (100) ausgetretener Schweißwulst abgetragen wird.

## Beschreibung

Die Erfindung betrifft ein Verfahren und eine Vorrichtung zur Herstellung einer Eckverbindung zwischen zwei an stirnseitigen Verbindungsflächen auf Gehrung zugeschnittenen Profilstäben aus Kunststoff und/oder Verbundwerkstoffen, bei welchem die miteinander zu verbindenden Profilstäbe in der für die Eckverbindung vorgesehenen Ausrichtung eingespannt und mit ihren Verbindungsflächen an einen auf eine vorgegebene Schweißtemperatur erhitzten Schweißspiegel angelegt und an diesem unter einer ersten Längenverkürzung und Bildung eines Schweißwulstes aus dem bei der Längenverkürzung verdrängten Material angepresst werden und nach dem Entfernen des Schweißspiegels unter Druck und weiterer, zweiter Längenverkürzung zusammengefügt und miteinander unter Ausbildung der Eckverbindung verschweißt werden.

Derartige Verfahren sind bekannt und werden insbesondere zur Bildung von Fensterrahmen oder Fensterflügeln aus Kunststoff-Profilstäben verwendet, bei denen in den Eckbereichen des Fensterrahmens oder Fensterflügels zwei entsprechend hergerichtete Profilstäbe mit ihren üblicherweise auf Gehrung geschnittenen Verbindungsflächen miteinander verschweißt werden. Zu diesem Zweck werden üblicherweise Schweißvorrichtungen verwendet, mit denen - je nach Ausgestaltung der Vorrichtung - eine Ecke, zwei Ecken oder alle vier Ecken eines Fensterrahmens oder Fensterflügels gleichzeitig zusammengeschweißt werden können. Dabei besitzt jede Schweißvorrichtung für jede Ecke einen Schweißkopf mit einem beheizbaren Schweißspiegel sowie für jeden Profilstab eine Spanneinheit. Jede Spanneinheit weist dabei eine obere und eine untere Begrenzungsrampe auf, zwischen denen jeweils ein Profilstab gehalten ist.

Für den eigentlichen Schweiß- bzw. Fügevorgang werden zunächst die beiden zu verbindenden Profilstäbe, die an ihren Verbindungsflächen etwa 3 mm länger als das Maß des fertigen Fensterrahmens oder Fensterflügels ausgeführt sind, aufeinander ausgerichtet und in einer Lage gesichert, in der die beiden Verbindungsflächen so weit voneinander beabstandet gehalten sind, dass der auf eine vorgegebene Temperatur erhitzte Schweißspiegel, üblicherweise eine beheizte Platte, zwischen dieselben eingeführt werden kann. Sodann werden die Verbindungsflächen der beiden Profilstäbe gegen den Schweißspiegel gepresst und dabei soweit angeschmolzen, dass eine erste Längenverkürzung um z.B. etwa 2 mm eintritt. Dabei entsteht bei diesem Pressvorgang in allen am Schweißspiegel anliegenden Bereichen der Profilstäbe ein sogenannter Schweißwulst aus dem bei der Längenverkürzung verdrängten Material des Profilstabes. Anschließend werden die Profilstäbe kurzzeitig vom Schweißspiegel abgehoben, sodass derselbe wieder in seine Ausgangslage zurückkehren kann. Nachfolgend werden die erhitzten Verbindungsflächen der beiden Profilstäbe erneut gegeneinandergepresst, wobei unter weiterer, zweiter Längenverkürzung sich der vorerwähnte Schweißwulst vergrößert. Die hierbei eintretende zweite Längenverkürzung beträgt üblicherweise etwa 1 mm und erreicht somit das gewünschte End- oder Fertigmaß der aneinander angrenzenden verschweißten Profilstäbe, die sich beim anschließenden Abkühlen der Verbindungsflächen in der gewünschten Weise durch Verschweißen des Kunststoffmaterials verbinden.

Die durch das Zusammenfügen der Profilstäbe im Bereich der Verbindungsflächen entstandenen Schweißwulste oder -grate sind nicht nur umlaufend außen, sondern auch an allen im Innern der Profilstäbe befindlichen Stegen vorhanden. Die Schweißwulste können teilweise scharfkantig sein und ergeben an den Sichtflächen des späteren Fensterrahmens oder Fensterflügels ein unerwünschtes Aussehen. Aus diesem Grund werden diese Schweißwulste zumindest an den Sichtflächen des geschweißten bzw. zusammengefügten Fensterrahmens oder Fensterflügels häufig in einem nachfolgenden Schritt entfernt. Dies erfolgt üblicherweise mittels besonderer Messer und/oder Fräser an der Ober- bzw. Vorderseite und an der Unter- bzw. Rückseite des geschweißten Fensterrahmens oder Fensterflügels, die zugleich die Sichtflächen desselben bilden. Durch den solchermaßen erforderlichen zusätzlichen Arbeitsgang erhöht sich nicht nur zwangsläufig die Zeit und der Aufwand für die Fertigung eines Fensterrahmens oder Fensterflügels, sondern es wird auch eine zusätzliche Vorrichtung benötigt. Darüber hinaus werden in der Regel Schattennuten erzeugt, die eine gegenüber der sonstigen Oberfläche des Fensterrahmens oder Fensterflügels rauere Oberfläche aufweisen, welche die Ablage von Schmutzpartikeln begünstigt und sich nur schlecht reinigen lässt.

Um zumindest einen Teil des Aufwands für die Beseitigung der sichtbaren und damit störenden Schweißwulste zu vermeiden und somit die Zeit für die Fertigung eines Fensterrahmens oder Fensterflügels zu verringern, ist es aus der DE 10 2015 013 439 A1 bekannt, nach dem Entfernen des Schweißspiegels die an den Sichtflächen des späteren Fensterrahmens oder Fensterflügels im Bereich der Verbindungsflächen bei-der Profilstäbe entstandenen äußeren Teile der Schweißwulste nach innen zu pressen, danach den Schweißspiegel erneut zwischen die Verbindungsflächen der Profilstäbe zu bewegen und die Verbindungsflächen bei gleichzeitiger Verformung der nach innen gepressten Schweißwulste nachzuerhitzen und schließlich nach dem erneuten Entfernen des Schweißspiegels die Verbindungsflächen der beiden Profilstäbe zusammenzufügen.

Aus der DE 10 2017 111 606 A1 ist darüber hinaus ein modifiziertes Verfahren bekannt, bei dem ebenfalls der äußere Schweißwulst vor dem Zusammenfügen der Profilstäbe nach innen verdrängt wird und dann zusammen mit den inneren Wulsten entfernt wird, sodass im Ergebnis im Bereich der Verbindungsstellen des fertigen Fensterrahmens oder Fensterflügels an dessen sichtbarer Ober- bzw. Vorderseite und an dessen Unter- bzw. Rückseite eine Art Schattennut entsteht, die durch den Einsatz eines entsprechend konturierten Schneidmessers erzeugt wird. Auch eine solche Schattennut weist jedoch den Nachteil auf, dass sich leicht Verschmutzungen darin ansammeln, die nur schwierig wieder entfernt werden können, außerdem erzeugt jedes Schneidmesser an der Oberfläche eine vom übrigen Profil abweichende Rauigkeit.

Aus der EP 2 822 751 B1 ist es bekannt, vor dem Aufheizen mittels des Schweißspiegels im Übergangsbereich der Verbindungsflächen zu den Sichtflächen eine stufenförmige Nut materialabtragend einzubringen und während des anschließenden Verpressens und Verschweißens einen Pressstempel auf die zuvor eingebrachte Nut aufzupressen, der den Austritt eines Schweißwulstes aus der Sichtfläche der verschweißten Profilstäbe unterbinden soll.

Aus der DE 10 2019 109 294 A1 ist es bekannt, nach dem Entfernen des Schweißspiegels den Schweißwulst im Bereich der Sichtfläche der Profilstäbe unter Ausbildung eines stufenförmigen Absatzes im Profilstab am Übergang zwischen der Sichtfläche und der Verbindungsfläche der Profilstäbe zu entfernen, wobei der Absatz solchermaßen bemessen ist, dass das beim anschließenden Zusammenfügen der Profilstäbe im Bereich ihrer Verbindungsflächen unter Druck verdrängte Material der Profilstäbe den stufenförmigen Absatz zwischen den Profilstäben vollständig auffüllt. Es wird also nicht nur der Schweißwulst im Bereich der Sichtfläche, d. h. der Vorderseite und/oder der Rückseite der Profilstäbe entfernt, nachdem die Verbindungsflächen am Schweißspiegel zur Anlage gekommen sind und wieder von diesem abgehoben wurden, sondern es wird auch ein stufenförmiger Absatz im Profilstab in dessen Übergangsbereich zwischen der Sichtfläche und der Verbindungsfläche erzeugt, der solchermaßen bemessen ist, dass anschließend beim Zusammenfügen der Profilstäbe im Bereich ihrer Verbindungsflächen das unter Druck verdrängte Material diesen stufenförmigen Absatz zwischen den Profilstäben vollständig auffüllt. Im Ergebnis wird somit eine Verschweißung zweier Profilstäbe erhalten, bei der weder ein Schweißwulst noch eine Schattennut zwischen den Profilstäben sichtbar ist, sondern diese stoßen unter idealerweise ebener Fortsetzung der Sichtflächen aneinander.

Allen diese vorgenannten Ausgestaltungen haben zum Ziel, die optische Qualität der Sichtflächen eines Fensterrahmens, die üblicherweise parallel zur durch die Verglasung des späteren Fensterrahmens aufgespannten Ebene verlaufen, zu verbessern. Die unerwünschten Schweißwulste treten jedoch nicht nur an den Sichtflächen, sondern auch im Bereich der Innen- und Außenseite der Eckverbindung auf.

Aus der WO 2017/137467 ist es bekannt, ein als Druckstück ausgebildetes Inneneckwerkzeug einzusetzen, um den inneren Eckbereich der Eckverbindung zu bearbeiten und den Schweißwulst zu unterbinden.

Zur Bearbeitung des äußeren Eckbereichs sind ebenfalls Presswerkzeuge bekannt, die jedoch aufgrund der häufig komplexen Oberflächen des äußeren Eckbereich individuell an die jeweilige Profilgeometrie angepasst sein müssen, was aufwendig ist und bei jedem Wechsel der Profilgeometrie hohe Rüstzeiten verursacht.

Aufgabe der Erfindung ist es, ein Verfahren und eine Vorrichtung der eingangs genannten Art vorzuschlagen, die die Nachteile des Standes der Technik überwinden.

Zur Lösung der gestellten Aufgabe wird ein Verfahren vorgeschlagen, bei welchem nach dem Verschweißen der Eckverbindung ein äußerer Eckbereich der Eckverbindung unter Aufrechterhaltung der Positionierung der Profilstäbe von einem zugeordneten Bearbeitungswerkzeug bearbeitet wird und dabei ein im äußeren Eckbereich ausgetretener Schweißwulst abgetragen wird.

Nach einem Vorschlag der Erfindung ist das Bearbeitungswerkzeug von einem Fräswerkzeug gebildet, sodass der im äußeren Eckbereich ausgetretene Schweißwulst dementsprechend spanabhebend mittels des Fräsers abgetragen wird. Es können insbesondere Finger- oder Scheibenfräser eingesetzt werden.

Nach einem weiteren Vorschlag der Erfindung kann das Bearbeitungswerkzeug auch von einem Laser oder einer Wasserstrahlschneideinrichtung gebildet sein, um den Schweißwulst im äußeren Eckbereich abzutragen.

Auch kann ein oszillierend angetriebenes gezahntes Werkzeug, etwa ein oszillierendes Sägeblatt zur Anwendung kommen, um den Schweißwulst im äußeren Eckbereich abzutragen. Ein solches oszillierendes Sägeblatt kann beispielsweise von einem Vibrationsmotor in einer horizontalen Ebene oszillierend angetrieben sein, wie es im Prinzip auch von handgehaltenen Vibrations-Multifunktionswerkzeugen bekannt ist.

Die im Rahmen der Erfindung zur Lösung der gestellten Aufgabe vorgesehene Vorrichtung zur Herstellung einer Eckverbindung zwischen zwei an stirnseitigen Verbindungsflächen auf Gehrung zugeschnittenen Profilstäben aus Kunststoff und/oder Verbundwerkstoffen umfasst Spanneinrichtungen für jeweils zwei zueinander ausgerichtete und zu verbindende Profilstäbe und einen in den Zwischenraum zwischen den zu verbindenden Profilstäben vorübergehend einführbaren beheizbaren Schweißspiegel, wobei erfindungsgemäß vorgesehen ist, dass ein Bearbeitungskopf nach dem Verschweißen der Eckverbindung vorübergehend an einen äußeren Eckbereich der Eckverbindung der weiterhin in ihrer Positionierung verbleibenden Profilstäbe heranfahrbar ist und mindestens ein Bearbeitungswerkzeug trägt, mit welchem der äußere Eckbereich bearbeitbar ist, um einen im äußeren Eckbereich ausgetretenen Schweißwulst abzutragen.

Bei dem Bearbeitungswerkzeug kann es sich insbesondere um ein Fräswerkzeug handeln, wobei weiter bevorzugt ein Finger- oder Scheibenfräser zum Einsatz kommt. Alternativ können auch Laser- oder Wasserstrahlbearbeitungseinrichtungen oder ein oszillierendes Sägeblatt als Bearbeitungswerkzeug vorgesehen sein.

Ein wesentlicher Vorteil des erfindungsgemäßen Verfahrens und der erfindungsgemäßen Vorrichtung ist darin zu sehen, dass das am Bearbeitungskopf gehalterte Bearbeitungswerkzeug nach dem Verschweißen der Eckverbindung zum Einsatz kommt, wobei die aus den verschweißten Profilstäben gebildete Eckverbindung nach wie vor in der zum Verschweißen eingenommenen Positionierung gehalten ist, d. h. die Bearbeitung erfolgt ohne Neupositionierung unmittelbar nach dem Verschweißen der Eckverbindung, wodurch erhebliche Rüstzeiten eingespart werden können und zugleich der Abtrag der ausgetretenen Schweißraupe im äußeren Eckbereich mit höchster Präzision durchgeführt werden kann. Die solchermaßen bearbeiteten Eckverbindung zeichnen sich durch besonders hohe Qualität aus. Zudem kann sehr flexibel auf unterschiedliche Profilgeometrien eingegangen werden. Da keine erneute Positionierung und Einmessung der Werkzeuge erfolgen muss, wird die Prozesssicherheit bedeutend erhöht.

Nach einem weiteren Vorschlag der Erfindung ist der Bearbeitungskopf so ausgebildet, dass er zusätzlich zum Bearbeitungswerkzeug weitere Werkzeuge zur Bearbeitung der Verbindungsflächen vor dem Verschweißen der Eckverbindung aufweist, sodass er in an sich bekannter Weise auch vor dem Verschweißen im Rahmen der Herstellung der Eckverbindung zum Einsatz kommen kann, indem er vorübergehend in den Zwischenraum zwischen den zu verbindenden Profilstäben einführbar ist, um mittels der Werkzeuge die Verbindungsflächen zu bearbeiten. Beispielsweise kann mittels der Werkzeuge an den noch nicht verschweißten Verbindungsflächen ein stufenförmiger Absatz eingebracht werden, wie es in der DE 10 2019 109 294 A1 beschrieben ist. Anschließend wird der Bearbeitungskopf aus dem Zwischenraum entfernt und der Schweißspiegel eingeführt, um die zu verbindenden Profilstäbe stirnseitig anzuschmelzen und nachfolgend den Verschweißvorgang zur Ausbildung der Eckverbindung durchzuführen. Sodann kommt der Bearbeitungskopf in der erfindungsgemäßen Weise erneut zum Einsatz und bringt das zusätzlich vorgesehene Bearbeitungswerkzeug in seiner Arbeitsposition am äußeren Eckbereich der erstellten Eckverbindung, um den eventuell ausgetretenen Schweißwulst abzutragen.

Ein solcher Bearbeitungskopf trägt somit üblicherweise zwei um 180° zueinander versetzt angeordnete und gemeinsam angetriebene Werkzeuge für die Erstellung der stufenförmigen Absätze an den Verbindungsflächen der beiden Profilabschnitte sowie ein gegenüber beiden Werkzeugen um vorzugsweise 90° gedreht angeordnetes Bearbeitungswerkzeug zum Abtrag des Schweißwulstes im äußeren Eckbereich. Sämtliche Werkzeuge und das Bearbeitungswerkzeug können von einem gemeinsamen Drehantrieb des Bearbeitungskopfes durch eine entsprechende Winkelgetriebeanordnung gleichermaßen angetrieben werden, es können aber auch Druckluftantriebe sowie unabhängige Direktantriebe der Werkzeuge und des Bearbeitungswerkzeuges vorgesehen sein.

Je nach Ausgestaltung der Spanneinrichtung kann diese vor und während der Ausbildung der Schweißverbindung sowie dem anschließenden Entfernen des Schweißwulstes im äußeren Eckbereich die Profile fixieren, oder aber die Spanneinrichtung wird nach dem Ausbilden der Schweißverbindung gelöst, um einen Freiraum für das Einführen des Bearbeitungskopfes freizugeben. In diesem Fall wird die Positionierung der Eckverbindung der Profilabschnitte durch geeignete sekundäre Fixierungsmittel aufrechterhalten, um die Eckverbindung in ihrer Position zu halten.

Sofern die Werkzeuge und das Bearbeitungswerkzeug als zylinderförmige Fingerfräser ausgebildet sind, können diese beispielsweise in einer gemeinsamen horizontalen Ebene angeordnet sein, in der sich auch die jeweiligen Rotationsachsen der Fingerfräser erstrecken, oder einen Höhenversatz zueinander aufweisen.

Anstelle eines als Fingerfräser ausgebildeten Bearbeitungswerkzeuges kann auch ein unterhalb des Bearbeitungskopfes angeordneter und um eine vertikale Achse rotierender Scheibenfräser als Bearbeitungswerkzeug vorgesehen sein, der gleichsam mit einem unabhängigen Drehantrieb oder gemeinsam mit den Werkzeugen des Bearbeitungskopfes angetrieben werden kann.

Als Bearbeitungswerkzeug kommt alternativ auch ein umfänglich gezahntes Sägeblatt in Frage, welches von einem Vibrationsantrieb in eine oszillierende horizontale Bewegung versetzt wird, um die ausgetretene Schweißwulst im äußeren Eckbereich abzutragen.

Alternativ kann nach einer weiteren Ausgestaltung der Erfindung auch vorgesehen sein, dass der Bearbeitungskopf über die Werkzeuge zur Bearbeitung der Verbindungsflächen vor dem Verschweißen der Eckverbindung verfügt und in der bereits beschriebenen Weise vor dem Verschweißen vorübergehend in den Zwischenraum zwischen den zu verbindenden Profilstäben einführbar ist, um mittels der Werkzeuge die Verbindungsflächen zu bearbeiten, beispielsweise zwecks Einbringung stufenförmiger Absätze, jedoch ist mindestens eines der Werkzeuge derart am Bearbeitungskopf verschwenkbar gehaltert bzw. der gesamte Bearbeitungskopf verschwenkbar gehaltert, sodass nach dem Verschweißen der Eckverbindung das verschwenkbare Werkzeug in eine solche Position verschwenkt werden kann, dass es als Bearbeitungswerkzeug zum Bearbeiten des äußeren Eckbereichs der verschweißten Eckverbindung genutzt werden kann. Es ist offensichtlich, dass in einem solchen Falle der Bearbeitungskopf ohne zusätzliches Bearbeitungswerkzeug auskommt, da mindestens eines der vorhandenen Werkzeuge einer Doppelnutzung zugeführt wird.

Weitere Ausgestaltungen und Einzelheiten der Erfindung werden nachfolgend anhand eines Ausführungsbeispiels in der Zeichnung erläutert.

Die einzige Figur zeigt einen Ausschnitt einer Bearbeitungsvorrichtung zur Erstellung einer Eckverbindung zwischen zwei Profilstäben 1 aus Kunststoff, wie sie insbesondere zur Herstellung eines Fensterflügels zum Einsatz kommen kann.

Die beiden zu verbindenden Profilstäbe 1 sind an ihren zu verbindenden stirnseitigen Enden auf Gehrung zugeschnitten und mit einem gewissen Übermaß abgelängt, welches sich aus der gewünschten Fertigteillänge zuzüglich eines nachfolgend erläuterten ersten und zweiten Abbrandes berechnet.

Beide Profilstäbe 1 sind ober- und unterseitig zwischen entsprechenden oberen und unteren Spanneinrichtungen 200, 201 mit Messerkanten 2 eingespannt, wobei die Spanneinrichtungen 200, 201 in nicht näher dargestellter Weise auch über Verfahreinrichtungen verfügen, um die eingespannten Profilstäbe 1 entlang ihrer Längserstreckung aufeinander zu bzw. voneinander weg zu bewegen.

Zur Herstellung einer hier unter 90° verlaufenden Eckverbindung 10 zwischen den beiden Profilstäben 1 werden diese nach ihrer Einspannung zwischen den Spanneinrichtungen 200, 201 zunächst in einem solchen Abstand voneinander positioniert, dass in einen Zwischenraum zwischen den beiden auf Gehrung zugeschnittenen stirnseitigen Verbindungsflächen ein hier nicht dargestellter beheizter Schweißspiegel eingebracht werden kann, an den sodann die stirnseitigen Verbindungsflächen der beiden Profilstäbe 1 unter Erwärmung angepresst werden. Dabei erfahren die Profilstäbe 1 eine Längenverkürzung, die als der erste Abbrand bezeichnet wird und das erweichte aufgeschmolzene Material bildet einen Schweißwulst.

Anschließend werden die beiden an ihren stirnseitigen Verbindungsflächen aufgeschmolzenen Profilstäbe 1 wieder in entgegengesetzter Richtung ein Stück weit vom Schweißspiegel abgehoben, sodass dieser aus dem Zwischenraum entfernt werden kann.

Sodann wird ein Bearbeitungskopf 300 mittels eines Spindelantriebs 31 aus einer zuvor vertikal oberhalb angeordneten Ruheposition, in der er das seitliche Einfahren des Schweißspiegels nicht behindert, in eine Arbeitsposition verfahren.

Der Bearbeitungskopf 3 trägt an zwei um jeweils 180° zueinander gedrehten Positionen Werkzeuge 30, beispielsweise Fingerfräser, die an den Verbindungsflächen der Profilstäbe 1 entlang geführt werden und jeweils einen stufenförmigen Absatz unter Entfernung des im Bereich der oberseitigen Sichtfläche ausgetretenen Schweißwulst abtragen, wobei der stufenförmige Absatz so bemessen ist, dass beim unmittelbar nachfolgenden Aneinanderpressen der Verbindungsbereiche der beiden Profilstäbe 1 die eintretende zweite Längenverkürzung derselben, die als zweiter Abbrand bezeichnet wird, den stufenförmigen Absatz vollständig auffüllt, sodass im Bereich der oberseitigen Sichtfläche der Eckverbindung 10 kein austretender Schweißwulst vorhanden ist.

Nach einer gewissen Haltezeit der solchermaßen aufeinander gepressten stirnseitigen Verbindungsflächen der Profilstäbe 1 ist die gewünschte Eckverbindung 10 zwischen diesen belastbar ausgebildet und verschweißt.

Diese zeigt, wie bereits erwähnt, im Bereich der oberseitigen Sichtfläche keinen sichtbar austretende Schweißwulst, allerdings tritt ein solcher Schweißwulst unvermeidlich im äußeren Eckbereich 100 der Eckverbindung 10 hervor.

Um diesen zu entfernen, wird erneut der Bearbeitungskopf 300 verwendet, denn dieser trägt um 90° gedreht zu den beiden Werkzeugen 30 ein weiteres Bearbeitungswerkzeug 3, dass im dargestellten Ausführungsbeispiel ebenfalls als Fingerfräser ausgebildet ist. Sowohl das Bearbeitungswerkzeug 3 als auch die Werkzeuge 30 erstrecken sich gemeinsam in einer horizontalen Ebene oder leicht stufenförmig versetzt zueinander und werden von einem gemeinsamen Drehantrieb in Rotation versetzt.

Das Bearbeitungswerkzeug 3 ragt demzufolge in Richtung des äußeren Eckbereichs 100 der durch geeignete Maßnahmen immer noch in ihrer Positionierung verharrenden Eckverbindung 10 der Profilstäbe 1 hervor und kann mittels einer entsprechenden, mindestens 2-achsigen Steuerung nunmehr die exakte gewünschte Außenkontur des äußeren Eckbereich der Eckverbindung 10 abfahren, wobei der im äußeren Eckbereich 100 ausgetretene Schweißwulst spanabhebend abgetragen wird. In der Steuerung ist dazu der Kantenverlauf der Eckverbindung 10 abgelegt und wird vom Bearbeitungswerkzeug abgefahren, wobei der überstehende Schweißwulst entfernt wird.

Es erfolgt somit die vollständige Erstellung und Nachbearbeitung der Eckverbindung 10 in einer einzigen Vorrichtung und in einer einzigen Positionierung der Profilabschnitte 1.

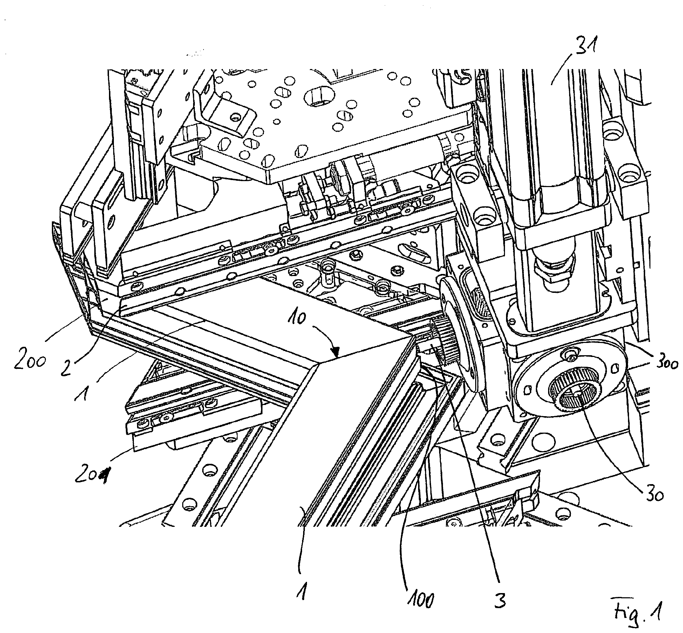

Anstelle eines sowohl Werkzeuge 30 als auch das Bearbeitungswerkzeug 3 tragenden Bearbeitungskopfes 300 kann auch ein Bearbeitungskopf 300 eingesetzt werden, der lediglich über die beiden Werkzeuge 30 verfügt, wobei mittels einer Schwenkvorrichtung entweder eines der Werkzeuge 30 oder der gesamte Bearbeitungskopf 300 um 90° verschwenkt werden kann, sodass beispielsweise das in Figur 1 sichtbare Werkzeug 30 in eine Position entsprechend der eingezeichneten Position des Bearbeitungswerkzeugs 3 verbracht werden kann und dann den Schweißwulst im Bereich des äußeren Eckbereichs der Eckverbindung 10 abtragen kann.

Gleichermaßen kann anstelle eines spanabhebenden Bearbeitungswerkzeuges 30, wie einem Fräser, auch vorgesehen sein, das Bearbeitungswerkzeug 30 von einem Laser oder einer Wasserstrahlbearbeitungseinrichtung auszubilden. Auch kann ein vorzugsweise horizontal oszillierendes, z.B. mittels eines Vibrationsmotors angetriebenes Sägeblatt mit einer entsprechenden randseitigen Verzahnung vorgesehen sein.

### Bezugszeichenliste:

- 1:: Profilstab
- 2:: Schneidkanten
- 3:: Bearbeitungswerkzeug
- 10:: Eckverbindung
- 30:: Werkzeug
- 31:: Spindelantrieb
- 100:: äußerer Eckbereich
- 200:: Spanneinrichtung
- 201:: Spanneinrichtung
- 300:: Bearbeitungskopf

## Patentansprüche

1. Verfahren zur Herstellung einer Eckverbindung (10) zwischen zwei an stirnseitigen Verbindungsflächen auf Gehrung zugeschnittenen Profilstäben (1) aus Kunststoff und/oder Verbundwerkstoffen, bei welchem die miteinander zu verbindenden Profilstäbe (1) in der für die Eckverbindung (10) vorgesehenen Ausrichtung eingespannt und mit ihren Verbindungsflächen an einen auf eine vorgegebene Schweißtemperatur erhitzten Schweißspiegel angelegt und an diesem unter einer ersten Längenverkürzung und Bildung eines Schweißwulstes aus dem bei der Längenverkürzung verdrängten Material angepresst werden und nach dem Entfernen des Schweißspiegels unter Druck und weiterer, zweiter Längenverkürzung zusammengefügt und miteinander unter Ausbildung der Eckverbindung verschweißt werden, **dadurch gekennzeichnet, dass** nach dem Verschweißen der Eckverbindung (10) ein äußerer Eckbereich (100) der Eckverbindung (10) unter Aufrechterhaltung der Positionierung der Profilstäbe (1) von einem zugeordneten Bearbeitungswerkzeug (3) bearbeitet wird und dabei ein im äußeren Eckbereich (100) ausgetretener Schweißwulst abgetragen wird.

2. Verfahren nach Anspruch 1, **dadurch gekennzeichnet, dass** das Bearbeitungswerkzeug (3) von einem Fräswerkzeug gebildet ist.

3. Verfahren nach einem der Ansprüche 1 oder 2, **dadurch gekennzeichnet, dass** als Bearbeitungswerkzeug (3) ein Finger- oder Scheibenfräser verwendet wird.

4. Verfahren nach Anspruch 1, **dadurch gekennzeichnet, dass** das Bearbeitungswerkzeug (3) von einem oszillierenden Sägeblatt, einem Laser oder einer Wasserstrahlschneideinrichtung gebildet ist.

5. Vorrichtung zur Herstellung einer Eckverbindung zwischen zwei an stirnseitigen Verbindungsflächen auf Gehrung zugeschnittenen Profilstäben (1) aus Kunststoff und/oder Verbundwerkstoffen, umfassend Spanneinrichtungen (200, 201) für jeweils zwei zueinander ausgerichtete und zu verbindende Profilstäbe (1) und einen in den Zwischenraum zwischen den zu verbindenden Profilstäben (1) vorübergehend einführbaren beheizbaren Schweißspiegel, **dadurch gekennzeichnet, dass** ein Bearbeitungskopf (300) vorgesehen ist, der nach dem Verschweißen der Eckverbindung (10) vorübergehend an einen äußeren Eckbereich (100) der Eckverbindung (10) der in der von den Spanneinrichtungen (200, 201) vorgegebenen Positionierung verharrenden Profilstäbe (1) heranfahrbar ist und mindestens ein Bearbeitungswerkzeug (3) trägt, mit welchem der äußere Eckbereich (100) bearbeitbar ist, um einen im äußeren Eckbereich (100) ausgetretenen Schweißwulst abzutragen.

6. Vorrichtung nach Anspruch 5, **dadurch gekennzeichnet, dass** das Bearbeitungswerkzeug (3) ein Fräswerkzeug ist.

7. Vorrichtung nach einem der Ansprüche 5 oder 6, **dadurch gekennzeichnet, dass** das Bearbeitungswerkzeug (3) einen Finger- oder Scheibenfräser oder eine Laser- oder Wasserstrahlbearbeitungseinrichtung umfasst.

8. Vorrichtung nach einem der Ansprüche 5 bis 7, **dadurch gekennzeichnet, dass** der Bearbeitungskopf (300) zusätzlich zum Bearbeitungswerkzeug (3) weitere Werkzeuge zur Bearbeitung der Verbindungsflächen vor dem Verschweißen der Eckverbindung aufweist und vor dem Verschweißen vorübergehend in den Zwischenraum zwischen den zu verbindenden Profilstäben (1) einführbar ist, um mittels der Werkzeuge die Verbindungsflächen zu bearbeiten.

9. Vorrichtung nach einem der Ansprüche 5 bis 7, **dadurch gekennzeichnet, dass** der Bearbeitungskopf (300) Werkzeuge zur Bearbeitung der Verbindungsflächen vor dem Verschweißen der Eckverbindung aufweist und vor dem Verschweißen vorübergehend in den Zwischenraum zwischen den zu verbindenden Profilstäben (1) einführbar ist, um mittels der Werkzeuge die Verbindungsflächen zu bearbeiten, wobei mindestens ein Werkzeug derart am oder mit dem Bearbeitungskopf (300) verschwenkbar ist, dass es nach dem Verschweißen der Eckverbindung (10) als Bearbeitungswerkzeug (3) zur Bearbeitung des äußeren Eckbereiches (100) einsetzbar ist.
